# EUROPEAN PATENT APPLICATION

(11) **EP 4 675 709 A1**
(43) Date of publication of application: **07.01.2026**
(21) Application number: 25161136.4
(22) Date of filing: 28.02.2025
(51) Int. Cl.: H01M 4/62, H01M 4/66

(54) **POSITIVE ELECTRODE FOR RECHARGEABLE LITHIUM BATTERY AND RECHARGEABLE LITHIUM BATTERY INCLUDING SAME**

(30) Priority: 24.04.2024 KR 20240054943
(71) Applicant: SAMSUNG SDI CO., LTD., Yongin-si, Gyeonggi-do 17084 (KR)
(72) Inventor: KIM, Suhyun, 17084 Yongin-si (KR)
(74) Representative: Marks & Clerk LLP

(57) **Abstract**

Disclosed are a positive electrode for a rechargeable lithium battery, and a rechargeable lithium battery including the positive electrode. The positive electrode includes a current collector, a positive active material layer including a positive active material, and a functional layer between the current collector and the positive active material layer. The functional layer includes an additive configured to decompose at 160 °C or more and configured to fulfill an endothermic function, a thermally expandable polymer, and a conductive material.

## Description

### BACKGROUND

### (a) Field

Example embodiments relate to a positive electrode for a rechargeable lithium battery, and a rechargeable lithium battery including the positive electrode.

### (b) Description of the Related Art

The development of electronic devices such as, e.g., mobile phones, laptop computers, electric vehicles, and the like, using batteries has resulted in an increase in demand for rechargeable batteries with relatively high capacity and lighter weight.

Such rechargeable lithium batteries typically include a positive electrode including a positive active material, a negative electrode including a negative active material, a separator between the positive electrode and the negative electrode, and an electrolyte.

### SUMMARY

One or more example embodiments include a positive electrode for a rechargeable lithium battery exhibiting satisfactory thermal safety and satisfactory lifecycle characteristics.

Another example embodiment includes a rechargeable lithium battery including the positive electrode.

One or more example embodiments include a positive electrode for a rechargeable lithium battery, the positive electrode including a current collector, a positive active material layer including a positive active material, and a functional layer between the current collector and the positive active material layer, wherein the functional layer includes an additive configured to decompose at about 160 °C and is configured to fulfill an endothermic function, a thermally expandable polymer, and a conductive material.

The additive may be or include an endothermic ceramic. The endothermic ceramic may be or include at least one of boehmite, pseudoboehmite, gibbsite, bayerite, amorphous aluminium hydroxide, or a combination thereof.

Another example embodiment includes a rechargeable lithium battery including the positive electrode, a negative electrode including a negative active material, and an electrolyte.

At least some of the above and other features of the invention are set out in the claims.

Other example embodiments are included in the following detailed description.

A positive electrode for a rechargeable lithium battery according to one or more example embodiments may exhibit desired or improved thermal safety and lifecycle characteristic.

### BRIEF DESCRIPTION OF THE DRAWINGS

FIG. 1 schematically illustrates the structure of the negative active material for a rechargeable lithium battery, according to one or more example embodiments.
FIG. 2 is a schematic diagram illustrating a rechargeable lithium battery, according to one or more example embodiments.
FIG. 3(a) and FIG. 3(b) are each an SEM image for the cross-section of the positive electrode according to Example 1.

### DETAILED DESCRIPTION

Hereinafter, example embodiments are described in detail. However, these embodiments are examples, the present disclosure is not limited thereto and the present disclosure is defined by the scope of claims.

Terms used in the specification are used to explain example embodiments, but are not intended to limit the present disclosure. Expressions in the singular include expressions in plural unless the context clearly dictates otherwise.

The term "combination thereof may include a mixture, a laminate, a complex, a copolymer, an alloy, a blend, a reactant of constituents.

The terms "comprise," "include" or "have" are intended to designate that the performed characteristics, numbers, steps, constituted elements, or a combination thereof are present, but should be understood that the possibility of presence or addition of one or more other characteristics, numbers, steps, constituted elements, or a combination are not to be precluded in advance.

The drawings show that the thickness is enlarged in order to clearly show the various layers and regions, and the same reference numerals are given to similar parts throughout the specification. If an element, such as a layer, a film, a region, a plate, and the like is referred to as being "on" or "over" another part, the element may be "directly on" another element, but also cases where there is another element in between. In contrast, if an element is referred to as being "directly on" another element, there are no intervening elements present.

Herein, "layer" includes a shape totally formed on the entire surface or a shape partial surface, if viewed from a plane view.

Herein, "or" is not to be construed as an exclusive meaning, for example, "A or B" is construed to include A, B, A+B, and the like.

As used herein, if a definition is not otherwise provided, a particle diameter or a particle size may be an average particle diameter. Such an average particle diameter indicates an average particle diameter (D50) where a cumulative volume is about 50 volume% in a particle size distribution. The average particle size (D50) may be measured by a method well known to those skilled in the art, for example, by a particle size analyzer, or by a transmission electron microscopic (TEM) image, or a scanning electron microscopic (SEM) image. In some example embodiments, a dynamic light-scattering measurement device is used to perform a data analysis, and the number of particles is counted for each particle size range, and from this, the average particle diameter (D50) value may be easily obtained through a calculation.

In some example embodiments, an average particle diameter may be measured by various techniques, and for example, may be measured by a particle analyzer.

In some example embodiments, a thickness may be measured by a scanning electron microscope (SEM) or a transmission electron microscope (TEM) image for the cross-section, but is not limited thereto, and the thickness may be measured by any technique, as long as the technique may measure the thickness in the related arts. The thickness may be an average thickness.

As used herein, soft carbon refers to graphitizable carbon materials and are readily graphitized by heat treatment at a high temperature, e.g., about 2800 °C, and hard carbon refers to non-graphitizable carbon materials and are slightly graphitized by heat treatment. The terms soft carbon and hard carbon may be well known in the related arts.

If the terms "about" or "substantially" are used in this specification in connection with a numerical value, it is intended that the associated numerical value include a tolerance of ±10% around the stated numerical value. If ranges are specified, the range includes all values therebetween such as increments of 0.1%.

In some example embodiments, the crystalline carbon and the amorphous carbon may be distinguished through XRD measurement. The crystalline carbon includes natural graphite and artificial graphite. Natural graphite may indicate graphite which may be naturally generated by separating the graphite from minerals, and if measured by XRD, the interplanar spacing (d002) of the (002) plane may be about 3.350 Å to about 3.360 Å. Artificial graphite may indicate graphite manufactured by graphitization, and if measured by XRD, the interplanar spacing (d002) of the (002) plane may be about 3.355 Å to about 3.365 Å. Meanwhile, the amorphous carbon may have the interplanar spacing (d002) of the (002) plane of about 3.34 Å or less, if measured by XRD. The XRD may be measured using CuKα ray as a target line with an X-ray diffraction analyzer (e.g., product name: X'Pert, manufacturer: Malvern Panalytical) and by removing a monochromator to improve a peak density resolution. The measurement condition may be 2θ=10 ° to 80 °, a scan speed (°/S) of 0.044 to 0.089, and a step size (°/step) of 0.013 to 0.039.

One or more example embodiments include a positive electrode for a rechargeable lithium battery, the positive electrode including a current collector, a positive active material layer including a positive active material, and a functional layer positioned between the current collector and the positive active material layer.

In one or more example embodiments, the functional layer includes an additive, a thermally expandable polymer, and a conductive material. In the functional layer, the additive is configured to decompose at about 160 °C or more and is configured to fulfill an endothermic function. If physical events such as exposure to heat, penetration, collision, or the like, occur to a battery, and then the battery temperature is raised, the additive decomposes to generate water, i.e. an endothermic reaction occurs, thereby reducing the battery temperature. In other example embodiments, the generated water is volatilized to reduce the battery temperature. This improves the safety of the battery.

The additive may be configured to decompose in a temperature range of about 160 °C to about 220 °C. Such an additive may be or include an endothermic ceramic which may be configured to decompose in a temperature range of about 160 °C to about 220 °C. If an endothermic ceramic which may be configured to decompose at high temperatures of approximately 430 °C, such as alumina, is the additive, the improvement in safety is insignificant.

The endothermic ceramic may be or include at least one of boehmite, pseudoboehmite, gibbsite, bayerite, amorphous aluminium hydroxide, or a combination thereof. In one or more embodiments, the endothermic ceramic may be or include boehmite.

The effect for reducing or preventing overheating owing to the additive may be more effective, if a thermally expandable polymer is used together with the endothermic ceramic. In one or more example embodiments, if the battery temperature is substantially increased, the thermally expandable polymer is expanded in the volume to block ion passage, e.g., conductive paths, thereby more effectively reducing or suppressing overheating and explosion of the battery, and thus, the thermal safety may be further enhanced.

The particle diameter of the additive may be appropriately adjusted to perform a coating for forming the functional layer. For example, the particle diameter of the additive may be in a range of about 0.5 nm to about 500 nm, about 1 nm to about 400 nm, or about 5 about nm to about 300 nm.

In the functional layer, an amount of the additive may be, based on the total weight of the functional layer, in a range of about 1 wt% to about 50 wt%, about 5 wt% to about 40 wt%, about 10 wt% to about 30 wt%, or about 10 wt% to about 20 wt%. If the amount of the additive is within the range, the effects for reducing the battery temperature by decomposing the additive at high temperatures may be appropriately obtained.

In one or more example embodiments, an amount of the thermally expandable polymer may be, based on the total weight of the functional layer, in a range of about 5 wt% to about 90 wt%, about 10 wt% to about 80 wt%, or about 20 wt% to about 80 wt%. If the amount of the thermally expandable polymer satisfies any of the above ranges, the short-circuit owing to the function of the thermal expansion polymer may be increased.

In one or more example embodiments, a mixing ratio of the additive to the thermally expandable polymer may be a weight ratio of about 2:98 to about 40:60, or a weight ratio of about 10:90 to 35:65 weight ratio. In one or more example embodiments, while the amounts of the additive and the thermally expandable polymer are included in the ranges discussed above, the mixing ratio may satisfy the above ranges.

The mixing ratio of the additive to the thermally expandable polymer within the above ranges may increase or maximize the endothermic function and PTC (positive temperature coefficient) function.

In one or more example embodiments, the thermally expandable polymer may be or include a polymer being configured to expand in a temperature range of about 60 °C to about 200 °C, e.g., a polymer being capable of expanding at about 60 °C to about 180 °C, about 70 °C to about 160 °C, about 80 °C to 200°C, about 100 °C to about 200 °C, about 100 °C to about 180 °C, or about 100 °C to about 160 °C.

Examples of the thermally expandable polymer may be or include at least one of polyolefin, polystyrene, an ethylene-vinyl acetate copolymer, an ethylene-acrylic acid copolymer, an ethylene-methacrylic acid copolymer, polytetrafluoroethylene, polyamide, polyacrylonitrile, thermoplastic elastomer, polyethylene oxide, polyacetal, thermoplastic modified cellulose, polysulfone, a (meth)acrylate copolymer, polymethyl(meth)acrylate, or a copolymer thereof.

The polyolefin may include, e.g., at least one of polyethylene, polypropylene, polymethylpentene, polybutene, a modified product, or a combination thereof. In other example embodiments, the polyethylene may include at least one of high density polyethylene (density: about 0.94 g/cc to about 0.965 g/cc), medium density polyethylene (density: 0.925 g/cc to 0.94 g/cc), low density polyethylene (density: 0.91 g/cc to 0.925 g/cc), very low density polyethylene (density: 0.85 g/cc to 0.91 g/cc), or a combination thereof.

In other example embodiments, the thermally expandable polymer may include at least one of polyethylene, polypropylene, or a combination thereof. For example, the thermally expandable polymer may include polyethylene and polypropylene. If the polyethylene and polypropylene are used together therewith, a mixing ratio of polyethylene and polypropylene may be a weight ratio of about 1:1 to about 1.5:1 or a weight ratio of about 2:1 to about 1:2. If polyethylene and polypropylene are mixed at any of the above mixing ratios, as the thermally expandable polymer, the safety performance of the battery may be further secured, and the deterioration of the cycle-life at high temperatures may be simultaneously and effectively improved.

The thermally expandable polymer may have a wax form.

In one or more example embodiments, a thickness of the functional layer may be in a range of about 0.5 µm to about 10 µm, about 1 µm to about 10 µm, about 1 µm to about 5 µm, or about 1 µm to about 3 µm.

A ratio of the thickness of the functional layer to the thickness of the positive active material layer may be in a range of about 0.25:100 to about 10:100, about 1:100 to about 10:100, or about 2:100 to about 10:100.

If the thickness of the functional layer satisfies any of the above ranges, the decrease in the energy density may be minimized and the safety function may be exhibited.

In one or more example embodiments, the functional layer includes a conductive material and thus, the conductive path is maintained in the general operation condition, thereby actively transferring electrons and lithium, and thus, it including the functional layer may operate as a battery. If the functional layer does not include the conductive material, there is no conductive path in the general operation condition, and thus it including the functional layer without the conductive material may not operate as a battery.

The conductive material may include at least one of a carbon material, a metal material, metal carbide, metal nitride, metal silicide, or a combination thereof. The carbon material may be or include at least one of carbon black, graphite, carbon fiber, carbon nanotube (CNT), or a combination thereof, and the carbon black may be or include at least one of, e.g., acetylene black, Ketjen black, channel black, furnace black, lamp black, thermal black, or a combination thereof, and graphite may be or include at least one of natural graphite, artificial graphite, or a combination thereof. The metal material may be or include particles or a fiber of the metal such as nickel, or the like. The metal carbide may include, e.g., at least one of WC, B₄C, ZrC, NbC, MoC, TiC, TaC, or a combination thereof, the metal nitride may include at least one of TiN, ZrN, TaN, or a combination thereof, and the metal silicide may include, e.g., at least one of WSi₂, MoSi₂, or a combination thereof.

The conductive material may be included, based on 100 wt% of the functional layer, in a range of about 5 wt% to about 50 wt%, e.g., about 5 wt% to about 40 wt%, about 7 wt% to about 40 wt%, about 7 wt% to about 30 wt%. If the amount of the conductive material satisfies any of the above ranges, the functional layer may effectively help to readily promote the movements of the electrons and lithium under normal conditions, thereby enhancing the basic performance of the battery. Accordingly, overheating or explosion of the battery may be more effectively reduced or prevented, if physical events occur.

The functional layer may further include a binder. Examples of the binder may be or include at least one of polyacrylic acid, polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, an acrylated styrene-butadiene rubber, epoxy resin, nylon, or the like, but is not limited thereto.

In the functional layer, an amount of the binder may be, based on the total weight of the functional layer, about 4 wt% to about 70 wt%, about 5 wt% to about 50 wt%, or about 10 wt% to about 40 wt%. If the amount of the binder is within any of the above ranges, the additive, the thermally expandable polymer, and the conductive material may be sufficiently adhered to a current collector.

In one or more example embodiments, the current collector may be or include Al, but is not limited thereto.

In the positive active material layer including the positive active material, the positive active material may include a compound (lithiated intercalation compound) that is capable of intercalating and deintercalating lithium. In some example embodiments, at least one of a composite oxide of lithium and a metal including at least one of cobalt, manganese, nickel, or combinations thereof may be used. For example, the following compounds represented by any one of the following chemical formulas may be used. LiₐA_{1-b}X_{b}D¹₂ (0.90≤a≤1.8, 0≤b≤0.5); LiₐA_{1-b}X_{b}O_{2-c1}D¹_{c1} (0.90≤a≤1.8, 0≤b≤0.5, 0≤c1≤0.05); LiₐE_{1-b}X_{b}O_{2-c1}D¹_{c1} (0.90≤a≤1.8, 0≤b≤0.5, 0≤c1≤0.05); LiₐE_{2-b}X_{b}O_{4-c1}D¹_{c1} (0.90≤a≤1.8, 0≤b≤0.5, 0≤c1≤0.05); LiₐNi_{1-b-c}CO_{b}X_{c}D¹ₐ (0.90≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α<2); LiₐNi_{1-b-c}Co_{b}X_{c}O_{2-α}T₂ (0.90≤a≤1.8, 0≤b≤0.5, 0≤c≤0.5, 0<α<2); LiₐNi_{1-b-c}Mn_{b}X_{c}D¹_{α} (0.90≤a≤ 1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-6-c}Mn_{b}X_{c}O_{2-α}T₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1 ); LiₐNi_{b}Co_{c}L¹_{d}GₑO₂ (0.90≤a≤1.8, 0≤b≤0.9, 0≤c≤0.5, 0≤d≤0.5, 0≤e≤0.1 ); LiₐNiG_{b}O₂ (0.90≤a≤1.8, 0.001≤b≤0.1 ) LiₐCoG_{b}O₂ (0.90≤a≤1.8, 0.001≤b≤0.1 ); LiₐMn_{1-b}G_{b}O₂ (0.90≤a≤1.8, 0.001≤b≤0.1 ); LiₐMn₂G_{b}O₄ (0.90≤a≤1.8, 0.001≤b≤0.1 ); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li_{(3-f)}J₂(PO₄)₃ (0≤f≤2); Li_{(3-f)}Fe₂(PO₄)₃ (0≤f≤2); LiₐFePO₄ (0.90≤a≤1.8)

In the above chemical formulas, A is or includes at least one of Ni, Co, Mn, or combinations thereof; X is or includes at least one of Al, Ni, Co, Mn, Cr, Fe, Mg, Sr, V, a rare earth element, or combinations thereof; D is or includes at least one of O, F, S, P, or combinations thereof; E is or includes at least one of Co, Mn, or combinations thereof; T is or includes at least one of F, S, P, or combinations thereof; G is or includes at least one of Al, Cr, Mn, Fe, Mg, La, Ce, Sr, V, or combinations thereof; Q is or includes at least one of Ti, Mo, Mn, or combinations thereof; Z is or includes at least one of Cr, V, Fe, Sc, Y, or combinations thereof; J is or includes at least one of V, Cr, Mn, Co, Ni, Cu, or combinations thereof; L¹ is or includes at least one of Mn, Al, or combinations thereof.

The compounds may have a coating layer on the surface, or may be mixed with another compound having a coating layer. The coating layer may include at least one coating element compound including at least one of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include at least one of Mg, Al, Co, K, Na, Ca, Si, Ti, V, Sn, Ge, Ga, B, As, Zr, or mixture thereof. The coating layer may be disposed via a method having no adverse influence on properties of the positive electrode active material by using these elements in the compound, and, for example, the method may include any coating method such as, e.g., spray coating, dipping, and the like.

In the positive electrode, an amount of the positive active material may be about 90 wt% to about 98 wt% based on the total weight of the positive active material layer.

In example embodiments, the positive active material layer may further include a binder and a conductive material. The binder and the conductive material may be included in an amount of about 1 wt% to about 5 wt%, respectively based on the total amount of the positive active material layer.

The binder improves binding properties of positive active material particles with one another and with a current collector. Examples of the binder may be or include at least one of polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, or the like, but is not limited thereto.

The conductive material is included to provide electrode conductivity, and any electrically conductive material may be a conductive material unless the electrically conductive material causes a chemical change in the battery. Examples of the conductive material may include a carbon-based material such as at least one of natural graphite, artificial graphite, carbon black, acetylene black, ketjen black, a carbon fiber and the like; a metal-based material of a metal powder or a metal fiber including at least one of copper, nickel, aluminium, silver, and the like; a conductive polymer such as a polyphenylene derivative; or a mixture thereof.

One or more example embodiments include a rechargeable lithium battery including the positive electrode, a negative electrode including a negative active material, and an electrolyte.

The negative electrode active material includes at least one of a material that reversibly intercalates/deintercalates lithium ions, a lithium metal, a lithium metal alloy, a material capable of doping/dedoping lithium, or a transition metal oxide.

Examples of the material that reversibly intercalates/deintercalates lithium ions may include a carbonaceous negative electrode active material such as, e.g., crystalline carbon, amorphous carbon, or a combination thereof. Examples of the crystalline carbon may include graphite such as unspecified-shape, plate-shaped, flake, spherical or fibrous natural graphite or artificial graphite, and examples of the amorphous carbon may include at least one of soft carbon, hard carbon, mesophase pitch carbonized product, sintered coke, or the like.

The lithium metal alloy may include an alloy of lithium and a metal including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-included negative active material or a Sn-included material. The Si-including negative active material may be or include at least one of Si, a Si-C composite, SiOₓ (0<x<2), and a Si-Q alloy (wherein Q is an element including at least one of an alkali metal, an alkaline-earth metal, a Group 13 element, a Group 14 element, a Group 15 element, a Group 16 element, a transition metal, a rare earth element, and a combination thereof, but not Si). The Sn-including negative active material may be or include at least one of Sn, SnO₂, a Sn-R alloy (wherein R is an element including at least one of an alkali metal, an alkaline-earth metal, a Group 13 element, a Group 14 element, a Group 15 element, a Group 16 element, a transition metal, a rare earth element, and a combination thereof, but not Sn), or the like, and additionally, at least one of the above-listed compounds may be mixed with SiO₂. The elements Q and R may be or include at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

In one or more example embodiments, the Si-C composite may include silicon particles and an amorphous carbon coated on the surface of the silicon particle. For example, the silicon-carbon composite may include secondary particles where silicon primary particles are agglomerated, and an amorphous carbon coating layer on the surface of the secondary particles. The amorphous carbon may be located between the silicon primary particles, e.g., to coat the silicon primary particles. The silicon-carbon composite may also include a core in which silicon particles are distributed in an amorphous carbon matrix, and an amorphous carbon coating layer coated on a surface of the core.

The secondary particle is positioned at the center of the Si-C composite, so the secondary particle may be referred to as a core or a center part. The amorphous carbon coating layer may be referred to as an outer part or a shell.

The silicon particle may be or include nano silicon particles. The nano silicon particles may have a particle diameter of about 10 nm to about 1,000 nm, and according to one or more example embodiments, about 20 nm to about 900 nm, about 20 nm to about 800 nm, about 20 nm to about 500 nm, about 20 nm to about 300 nm, or about 20 nm to about 150 nm. If the average particle diameter of the silicon particles is within any of the above ranges, the large or extreme volume expansion caused during charge and discharge may be reduced or suppressed, and breakage of the conductive path due to crushing of particle may be reduced or prevented.

A mixing ratio of the nano silicon and the amorphous carbon may be about 1:99 to about 60:40 by weight ratio.

In one or more example embodiments, the secondary particles or the core may further include crystalline carbon. If the silicon-carbon composite further includes crystalline carbon, the Si-C composite may include secondary particles where the silicon primary particles and crystalline carbon are agglomerated and an amorphous carbon coating layer is formed on the surface of the secondary particles.

If the Si-C includes silicon particles, crystalline carbon, and amorphous carbon, an amount of the amorphous carbon may be about 30 wt% to about 70 wt% based on the total 100 wt% of the Si-C composite and an amount of the crystalline carbon may be about 1 wt% to about 20 wt% based on the total 100 wt% of the Si-C composite. An amount of the silicon particles may be, based on the total 100 wt% of the Si-C composite, about 20 wt% to about 70 wt%, and according to one or more example embodiments, about 30 wt% to about 60 wt%.

The particle diameter of the Si-C composite may be appropriately adjusted.

If the amorphous carbon is present surrounding the surface of the secondary particles, the thickness thereof may be adjusted appropriately, and may be, for example, a thickness of about 5 nm to about 100 nm.

In one or more example embodiments, the Si-C composite may be included as a first negative active material, and crystalline carbon may be included as a second negative active material. A mixing ratio of the first negative active material to the second negative active material may be in a range of about 1:99 to about 50:50 by weight ratio. In one or more example embodiments, the negative active material may include the first negative active material and the second negative active material at a weight ratio of about 5:95 to about 20:80.

The negative active material layer may include a binder, and may further include a conductive material. An amount of the binder may be about 1 wt% to about 5 wt% based on the total 100 wt% of the negative active material layer. An amount of the conductive material may be about 1 wt% to about 5 wt% based on the total 100 wt% of the negative active material layer.

The binder improves binding properties of negative active material particles with one another and with a current collector. The binder may be or include a non-aqueous binder, an aqueous binder, or a combination thereof.

The non-aqueous binder may be or include at least one of an ethylene propylene copolymer, polyacrylonitrile, polystyrene, polyvinylchloride, carboxylated polyvinylchloride, polyvinyl fluoride, polyurethane, polytetrafluoroethylene, polyvinylidene fluoride, polyethylene, polypropylene, polyamide imide, polyimide, or combinations thereof.

The aqueous binder may be or include at least one of a styrene-butadiene rubber, an acrylated styrene-butadiene rubber (ABR), an acrylonitrile-butadiene rubber, an acrylic rubber, a butyl rubber, a fluorine rubber, an ethylene oxide-containing polymer, polyvinyl pyrrolidone, polypropylene, polyepichlorohydrin, polyphosphazene, an ethylene propylene diene copolymer, polyvinyl pyridine, chlorosulfonated polyethylene, latex, a polyester resin, an acrylic resin, a phenolic resin, an epoxy resin, polyvinyl alcohol, or combinations thereof.

If the aqueous binder is a negative electrode binder, a cellulose-based compound may be further used as a thickener to provide viscosity. The cellulose-based compound includes one or more of carboxymethyl cellulose, hydroxypropylmethyl cellulose, methyl cellulose, or alkali metal salts thereof. The alkali metal may be or include at least one of Na, K, or Li. The cellulose compound may be referred to as a thickener, because the cellulose compound may impart viscosity, or may constitute a binder and thus, the cellulose compound may be referred to as a binder. The cellulose compound may be included in an appropriate amount within the amount of the binder.

The conductive material is included to provide electrode conductivity. Any electrically conductive material may constitute a conductive material unless the electrically conductive material causes a chemical change in the battery. Examples of the conductive material may be or include a carbonaceous material such as, e.g., at least one of natural graphite, artificial graphite, carbon black, acetylene black, ketjen black, a carbon fiber, or the like; a metal-based material of a metal powder or a metal fiber including at least one of copper, nickel, aluminium, silver, or the like; a conductive polymer such as a polyphenylene derivative; or a mixture thereof.

The current collector may include at least one of a copper foil, a nickel foil, a stainless steel foil, a titanium foil, a nickel foam, a copper foam, a polymer substrate coated with a conductive metal, or a combination thereof.

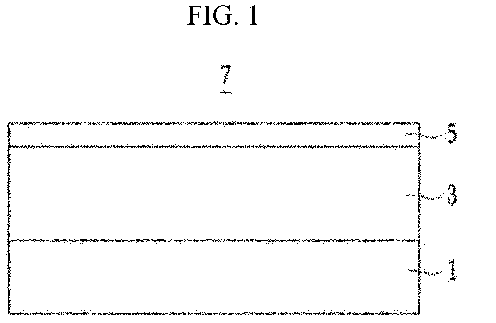

FIG. 1 schematically illustrates the positive electrode 7 according to one or more example embodiments, the positive electrode 7 including the current collector 1, the functional layer 3 formed on the current collector 1, and an active material layer 5 formed on the functional layer 3.

The electrolyte may include a non-aqueous organic solvent and a lithium salt.

The non-aqueous organic solvent may constitute a medium for transmitting ions taking part in the electrochemical reaction of a battery.

The non-aqueous organic solvent may include at least one of a carbonate-based solvent, an ester-based solvent, an ether-based solvent, a ketone-based solvent, an alcohol-based solvent, or aprotic solvent.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like. The ester-based solvent may include at least one of methyl acetate, ethyl acetate, n-propyl acetate, dimethyl acetate, methyl propionate, ethyl propionate, decanolide, mevalonolactone, γ-butyrolactone, valerolactone, caprolactone, or the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, or the like. The ketone-based solvent may include at least one of cyclohexanone, or the like. The alcohol-based solvent may include at least one of ethanol, isopropyl alcohol, and the like and the aprotic solvent may include nitriles such as R-CN (wherein R is a C2 to C20 linear, branched, or cyclic hydrocarbon group, and may include a double bond, an aromatic ring, or an ether bond, and the like); amides such as dimethylformamide; dioxolanes such as 1,3-dioxolane, 1,4-dioxolane, and the like; sulfolanes, or the like.

The organic solvent may be used alone or in a mixture. If the organic solvent is used in a mixture, the mixture ratio may be controlled in accordance with a desirable battery performance.

The carbonate-based solvent may include a mixture with a cyclic carbonate and a linear carbonate. The cyclic carbonate and linear carbonate may be mixed together in a volume ratio of about 1:1 to about 1:9, and if the mixture is an electrolyte, the mixture may have enhanced performance.

The organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be or include an aromatic hydrocarbon-based compound represented by Chemical Formula 1.

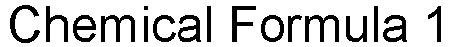

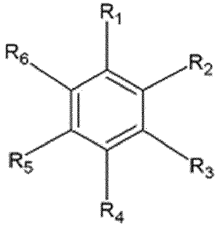

In Chemical Formula 1, R₁ to R₆ are the same or different and include at least one of hydrogen, a halogen, a C1 to C10 alkyl group, a haloalkyl group (e.g. a C1 to C10 haloalkyl group), and a combination thereof.

In one or more example embodiments, the aromatic hydrocarbon-based organic solvent may be or include at least one of benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylethylene carbonate, vinylene carbonate, an ethylene carbonate-based compound represented by Chemical Formula 2 as an additive for improving cycle life.

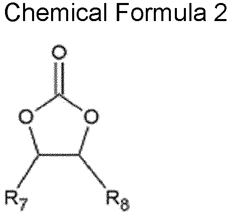

In Chemical Formula 2, R₇ and R₈ are the same or different and may each be or include independently at least one of hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound may be or include at least one of difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or the like. An amount of the additive for improving the lifecycle characteristics may be used within an appropriate range.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one or two supporting salts from LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂), wherein x and y are natural numbers, for example, an integer of about 1 to about 20), LiCl, Lil, or LiB(C₂O₄)₂ (lithium bis(oxalato) borate: LiBOB). A concentration of the lithium salt may range from about 0.1 M to about 2.0 M. If the lithium salt is included at the above concentration range, an electrolyte may have desired or improved performance, and lithium ion mobility due to improved or optimal electrolyte conductivity and viscosity.

A separator may be disposed between the positive electrode and the negative electrode depending on a type of a rechargeable lithium battery. The separator may include at least one of polyethylene, polypropylene, polyvinylidene fluoride or multi-layers thereof having two or more layers, and may be or include a mixed multilayer such as, e.g., a polyethylene/polypropylene double-layered separator, a polyethylene/polypropylene/polyethylene triple-layered separator, a polypropylene/polyethylene/polypropylene triple-layered separator, and the like.

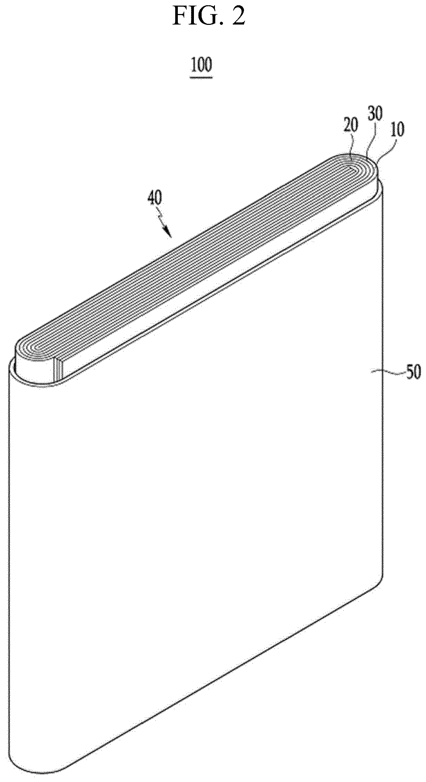

FIG. 2 is an exploded perspective view of a rechargeable lithium battery according to an example embodiment. The rechargeable lithium battery according to some example embodiments is illustrated as a prismatic battery, but is not limited thereto and may include variously-shaped batteries such as, e.g., a cylindrical battery, a pouch battery, and the like.

Referring to FIG. 2, a rechargeable lithium battery 100 according to an example embodiment may include an electrode assembly 40 manufactured by winding a separator 30 disposed between a positive electrode 10 and a negative electrode 20, and a case 50 housing the electrode assembly 40. An electrolyte (not shown) may be impregnated in the positive electrode 10, the negative electrode 20 and the separator 30.

The following Examples and Comparative Examples are provided in order to highlight characteristics of one or more example embodiments, but it will be understood that the Examples and Comparative Examples are not to be construed as limiting the scope of the example embodiments. Further, it will be understood that the example embodiments are not limited to the particular details described in the Examples and Comparative Example.

### Example 1

15 wt% of boehmite with an average particle diameter (D50) of 300 nm, 45 wt% of a wax form thermally expandable polymer which was a mixture of the high density polyethylene (density: 0.95 g/cc) and polypropylene (a mixing ratio of high density polyethylene and polypropylene: 1:1 by weight ratio), 30 wt% of carbon black, and 10 wt% of polyacrylic acid were mixed in a water solvent to prepare a functional layer slurry.

96 wt% of a LiNi_{0.6}CO_{0.2}Mn_{0.2}O₂ and LiNi_{0.6}Co_{0.2}Al_{0.2}O₂ positive active material (80:20 by weight ratio), 2 wt% of denka black, and 2 wt% of polyvinylidene fluoride were mixed in an N-methyl pyrrolidone solvent to prepare a positive active material slurry.

The functional layer slurry was coated on an Al foil current collector and dried to prepare a functional layer with a 2.5 µm thickness. On the functional layer, the positive active material slurry was coated and dried. The resulting dried product was pressurized to prepare a positive active material layer with a 60 µm thickness.

In the prepared positive electrode, the thickness of the functional layer was 2.5 µm and the thickness of the positive active material layer was 60 µm.

98 wt% of graphite, 0.8 wt% of carboxymethyl cellulose, and 1.2 wt% of a styrene-butadiene rubber were mixed in a pure water to prepare a negative active material slurry. The negative active material slurry was coated on a Cu foil, dried, and pressurized to prepare a negative electrode.

Using the positive electrode, the negative electrode, and an electrolyte, a rechargeable lithium cell was fabricated. As the electrolyte, a 1.0M LiPF₆ dissolved in a mixed solvent of ethylene carbonate and dimethyl carbonate (50:50 by volume ratio) was used.

### Example 2

10 wt% of boehmite with an average particle diameter (D50) of 300 nm, 50 wt% of a wax form thermally expandable polymer which was a mixture of the high density polyethylene (density: 0.95 g/cc) and polypropylene (a mixing ratio of high density polyethylene and polypropylene: 1:1 by weight ratio), 30 wt% of carbon black, and 10 wt% of polyacrylic acid were mixed in a water solvent to prepare a functional layer slurry. A positive electrode and a rechargeable lithium cell were fabricated by the same procedure as in Example 1, except for using the functional layer slurry.

### Example 3

20 wt% of boehmite with an average particle diameter (D50) of 300 nm, 40 wt% of a wax form thermally expandable polymer which was a mixture of the high density polyethylene (density: 0.95 g/cc) and polypropylene (a mixing ratio of high density polyethylene and polypropylene: 1:1 by weight ratio), 30 wt% of carbon black, and 10 wt% of polyacrylic acid were mixed in a water solvent to prepare a functional layer slurry. A positive electrode and a rechargeable lithium cell were fabricated by the same procedure as in Example 1, except for using the functional layer slurry.

### Example 4

A positive electrode and a rechargeable lithium cell were fabricated by the same procedure as in Example 1, with a difference that the functional layer slurry of Example 1 was used to prepare a functional layer with 0.5 µm thickness on the Al foil current collector.

### Example 5

A positive electrode and a rechargeable lithium cell were fabricated by the same procedure as in Example 1, with a difference that the functional layer slurry of Example 1 was used to prepare a functional layer with 3.0 µm thickness on the Al foil current collector.

### Comparative Example 1

96 wt% of a LiNi_{0.6}CO_{0.2}Mn_{0.2}O₂ and LiNi_{0.6}Co_{0.2}Al_{0.2}O₂ positive active material (80:20 by weight ratio), 2 wt% of denka black, and 2 wt% of polyvinylidene fluoride were mixed in an N-methyl pyrrolidone solvent to prepare a positive active material slurry.

On an Al foil current collector, the positive active material slurry was coated and dried. The resulting dried product was pressurized to prepare a positive active material layer with a 60 µm thickness.

Using the positive electrode, a rechargeable lithium cell was fabricated by the same procedure as in Example 1.

### Comparative Example 2

60 wt% of a wax form thermally expandable polymer which was a mixture of the high density polyethylene (density: 0.95 g/cc) and polypropylene (a mixing ratio of high density polyethylene and polypropylene: 1:1 by weight ratio), 30 wt% of carbon black, and 10 wt% of polyvinylidene fluoride were mixed in an N-methyl pyrrolidone solvent to prepare a functional layer slurry. A positive electrode and a rechargeable lithium cell were fabricated by the same procedure as in Example 1, except for using the functional layer slurry.

### Comparative Example 3

15 wt% of alumina, 45 wt% of a wax form thermally expandable polymer which was a mixture of the high density polyethylene (density: 0.95 g/cc) and polypropylene (a mixing ratio of high density polyethylene and polypropylene: 1:1 by weight ratio), 30 wt% of carbon black, and 10 wt% of polyacrylic acid were mixed in a water solvent to prepare a functional layer slurry. A positive electrode and a rechargeable lithium cell were fabricated by the same procedure as in Comparative Example 2, except for using the functional layer slurry. In the prepared positive electrode, the thickness of the functional layer was 2.5 µm and the thickness of the positive active material layer was 50 µm.

### Comparative Example 4

2.5 wt% of boehmite with an average particle diameter (D50) of 300 nm, 57.5 wt% of a wax form thermally expandable polymer which was a mixture of the high density polyethylene (density: 0.95 g/cc) and polypropylene (a mixing ratio of high density polyethylene and polypropylene: 1:1 by weight ratio), 30 wt% of carbon black, and 10 wt% of polyacrylic acid were mixed in a water solvent to prepare a functional layer slurry. A positive electrode and a rechargeable lithium cell were fabricated by the same procedure as in Comparative Example 2, except for using the functional layer slurry. In the prepared positive electrode, the thickness of the functional layer was 2.5 µm and the thickness of the positive active material layer was 60 µm.

### Comparative Example 5

51 wt% of boehmite with an average particle diameter (D50) of 300 nm, 9 wt% of a wax form thermally expandable polymer which was a mixture of the high density polyethylene (density: 0.95 g/cc) and polypropylene (a mixing ratio of high density polyethylene and polypropylene: 1:1 by weight ratio), 30 wt% of carbon black, and 10 wt% of polyacrylic acid were mixed in a water solvent to prepare a functional layer slurry. A positive electrode and a rechargeable lithium cell were fabricated by the same procedure as in Comparative Example 2, except for using the functional layer slurry. In the prepared positive electrode, the thickness of the functional layer was 2.5 µm, and the thickness of the positive active material layer was 60 µm.

### Experimental Example 1) Measurement of SEM

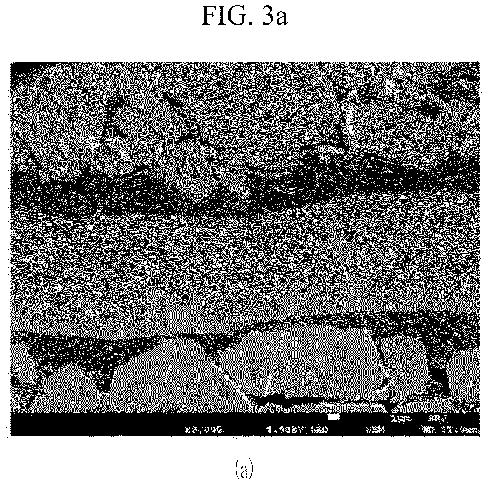

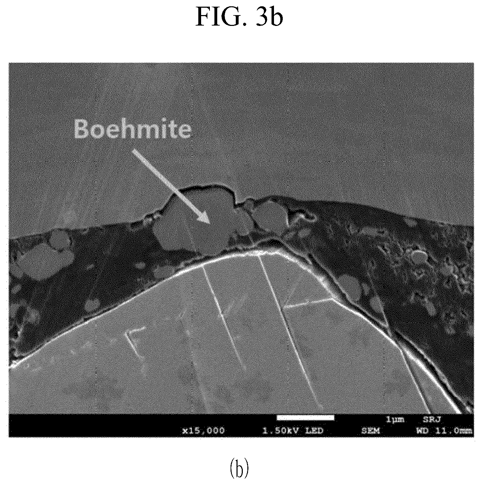

The SEM images for the cross-section of the positive electrode according to Example 1 were measured at 3000 magnification and 15000 magnification. The results are shown in FIG. 3(a) and FIG. 3(b), respectively.

As shown in FIG. 3(a) and FIG. 3(b), it can be seen that boehmite is presented in the positive electrode of Example 1.

### Experimental Example 2) Evaluation of increase ratio in resistance

Regarding the cells according to Examples 1 to 5 and Comparative Examples 1 to 5, resistance was measured for a temperature range of 30 °C to 130 °C by the following procedures to obtain an increase ratio in resistance.

The cell was put into an oven and a temperature was increased from a room temperature (23 °C) to 125 °C at 3 °C/minute, to measure a resistance when the battery temperature was reached to 125 °C. An increase ratio (%) in the resistance measured at 125 °C relative to the resistance measured at a room temperature (23 °C) was calculated. The results are shown in Table 1.

Among these results, the increase ratio in resistance at 125 °C is shown in Table 1.

### Experimental Example 3) Evaluation of cycle-life characteristic

At a room temperature (25 °C), the rechargeable lithium cells according to Examples 1 to 5 and Comparative Examples 1 to 5 were constant current charged at a current of 0.5 C to reach 4.4 V (vs. Li) and cut-off at a current of 0.05 C, while 4.4 V was maintained under a constant voltage mode. Thereafter, until voltage was reached to 2.8 V (vs. Li), discharged was carried out at a constant current of 1.0 C. These charge and discharge cycles were repeated for 150 cycles. In all charge and discharge cycles, a rest time for 10 minutes was set after charge/discharge one cycle.

The cycle-life characteristics of the rechargeable lithium cell was evaluated as cycle-life characteristic by Equation 1. The results are shown in Table 1, as room temperature cycle-life ratio (%). Equation 1 Capacity retention = [discharge capacity at 150th cycle/discharge capacity at 151 cycle] X 100

At a high temperature (45 °C), charge and discharge were carried out by the same procedure in the room temperature to obtain capacity retention by Equation 1. The results are shown in Table 1, as a high temperature cycle-life ratio (%).

**Table 1**

| | Increase ratio in resistance (%, 125 °C) | Room temperature cycle-life ratio (%) | High-temperature cycle-life ratio (%) |
|---|---|---|---|
| Example 1 | 120 | 84.0 | 83.2 |
| Example 2 | 260 | 83.8 | 83.1 |
| Example 3 | 60 | 83.5 | 82.9 |
| Example 4 | 30 | 84.2 | 83.3 |
| Example 5 | 200 | 84.0 | 83.1 |
| Comparative Example 1 | 5 | 84.1 | 83.1 |
| Comparative Example 2 | 700 | 84.0 | 83.0 |
| Comparative Example 3 | 121 | 83.7 | 79.8 |
| Comparative Example 4 | 600 | 83.9 | 82.9 |
| Comparative Example 5 | 10 | 83.7 | 82.5 |

As shown in Table 1, the cells according to Examples 1 to 5 and Comparative Examples 1, 3, and 5 exhibited appropriately increase ratio in resistance, and satisfactory cycle-life characteristics at room temperature and at a high temperature.

Whereas, Comparative Examples 2 and 4 exhibited high increase ratios in resistance.

### Experimental Example 4) Evaluation of bending

The rechargeable lithium cells according to Examples 1 to 5 and Comparative Examples 1 to 5 were placed on a dedicated jig for bending, the jig was descending at a descent speed of 300 N/min, and a test was terminated when the force was reached 500 N, thereby bending (folding) the cell at 90°. The bent cell was allowed to stand for 10 minutes, and then, the OCV and the surface temperature were measured.

Within 30 minutes after completing the bending, the bent cell was placed on a flat plate. After the flat plate crushing was initiated on the bent cell and then lowered to the bent cell at a lowering speed of 300 N/min. The test was terminated when the force reached 100 N to unfold the cell at 180°.

The bending evaluation experiments was conducted by fabricating three cells each according to Examples and Comparative Examples. The results according to the above tests are shown in Table 2.

### Experimental Example 5) Evaluation of heat exposure

The rechargeable lithium cells according to Examples 1 to 5 and Comparative Examples 1 to 5 were fully charged (SOC100, fully charged state, charged to be 100% of charge capacity based total charge capacity of cell, when the cell was charged), and the fully charged cells were allowed to stand at 134 °C, 137 °C, 139 °C, 140 °C, and 141 °C for 1 hour, respectively, to evaluate the state of the cells. The heat exposure results are shown in Table 2. The heat exposure results are measured by fabricating three cells, each according to Examples and Comparative Examples.

### Experimental Example 6) Evaluation of collision safety

The rechargeable lithium cells according to Examples 1 to 5 and Comparative Examples 1 to 5 were fully charged by charging to the maximum voltage at 0.5 C and cut-offing at 0.05 C and aged for 24 hours followed by evaluating for crush safety as follows:
The collision safety evaluation was measured by fabricating three cells each according to Examples and Comparative Examples.

The fully charged cells were placed on the steel plate with a thickness of 5 cm, a circular bar (ϕ15.8 ± 0.1mm) was positioned perpendicularly to the cell and at the center of the cell. A cylindrical plumb with 9.1 ± 0.46 kg was weight was dropped freely on the circular bar at a height of 610 ± 25 mm. After dropping the cylindrical plumb, the test was terminated when the cell surface temperature was reached at a room temperature +10 °C. The results are shown in Table 2.

The results shown in Table 2, "F" indicates fail, i.e., ignition, and the number represent the number of the cell. For example, 0F3 indicates that 0 cells have failed, i.e., there was no fail among three cells, and 3F3 indicates that all three cells have failed.

**Table 2**

| | Bending | Heat exposure | Collision |
|---|---|---|---|
| Example 1 | 0F3 | 0F3 | 0F3 |
| Example 2 | 0F3 | 1F3 | 3F3 |
| Example 3 | 0F3 | 0F3 | 0F3 |
| Example 4 | 0F3 | 0F3 | 0F3 |
| Example 5 | 0F3 | 0F3 | 0F3 |
| Comparative Example 1 | 3F3 | 3F3 | 3F3 |
| Comparative Example 2 | 0F3 | 3F3 | 3F3 |
| Comparative Example 3 | 0F3 | 2F3 | 3F3 |
| Comparative Example 4 | 2F3 | 0F3 | 0F3 |
| Comparative Example 5 | 3F3 | 0F3 | 3F3 |

As shown in Table 2, the rechargeable lithium cells according to Examples 1, 3, 4, and 5 exhibited no explosion when physical events such as bending, heat exposure, collision, or the like, indicating desired or improved safety.

The rechargeable lithium cell of Example 2 did not explode when a bending occurred, one cell exploded when heat exposure occurred and when collision occurred, which show slightly low safety, but low increase ratio in resistance, and better room temperature and high temperature lifecycle characteristics are exhibited.

All rechargeable lithium cells according to Comparative Example 1 exploded, when the physical events such as bending, heat exposure, collision, or the like, occurred, and thus, substantially deteriorated safety exhibited. Thus, even though the increase ratio in resistance was significantly low, and room temperature and high temperature lifecycle characteristics were satisfactory, Comparative Example 1 may be not suitable. In case of Comparative Example 2, all cells were exploded at heat exposure and collision.

Comparative Example 3 exhibited slightly deteriorated safety, as two cells exploded under heat exposure, and three cells exploded at collision, and poor high temperature lifecycle characteristic, as shown in Table 1.

Comparative Example 4 has somewhat suitable safety as two cells exploded only under bending, but exhibited a substantially high increase ratio in resistance, as shown in Table 1. Comparative Example 5 exhibited bad safety, as all cells exploded under both bending and collision.

Considering the results shown in Table 1 and Table 2, the cells according to Examples 1 to 5 exhibited an appropriate increase ratio in resistance, and lifecycle characteristics at room temperature and at high temperature, as well as appropriate safety.

While this disclosure has been described in connection with what is presently considered to be practical example embodiments, it is to be understood that the disclosure is not limited to the disclosed example embodiments, but, on the contrary, is intended to cover various modifications and equivalent arrangements included within the scope of the appended claims.

## Claims

1. A positive electrode for a rechargeable lithium battery, the positive electrode comprising:
a current collector;
a positive active material layer comprising a positive active material; and
a functional layer between the current collector and the positive active material layer,
wherein the functional layer comprises an additive configured to decompose at about 160 °C or more, a thermally expandable polymer, and a conductive material.

2. The positive electrode for a rechargeable lithium battery as claimed in claim 1, wherein the additive is configured to decompose in a temperature range of about 160 °C to about 220 °C.

3. The positive electrode for a rechargeable lithium battery as claimed in claim 1 or claim 2, wherein the additive comprises an endothermic ceramic, optionally wherein the endothermic ceramic comprises at least one of boehmite, pseudoboehmite, gibbsite, bayerite, and amorphous aluminium hydroxide.

4. The positive electrode for a rechargeable lithium battery as claimed in any one of claims 1 to 3, wherein a thickness of the functional layer is in a range of about 0.5 µm to about 10 µm.

5. The positive electrode for a rechargeable lithium battery as claimed in any one of claims 1 to 4, wherein an amount of the additive is in a range of about 1 wt% to about 50 wt% based on the total weight of the functional layer.

6. The positive electrode for a rechargeable lithium battery as claimed in any one of claims 1 to 5, wherein an amount of the thermally expandable polymer is in a range of about 5 wt% to about 90 wt% based on the total weight of the functional layer.

7. The positive electrode for a rechargeable lithium battery as claimed in any one of claims 1 to 6, wherein an amount of the conductive material is in a range of about 5 wt% to about 50 wt% based on the total weight of the functional layer.

8. The positive electrode for a rechargeable lithium battery as claimed in any one of claims 1 to 7, wherein a mixing ratio of the additive to the thermally expandable polymer is about 2:98 to about 40:60 by weight ratio.

9. The positive electrode for a rechargeable lithium battery as claimed in any one of claims 1 to 8, wherein a ratio of a thickness of the functional layer to a thickness of the positive active material layer is in a range of about 0.25:100 to about 10:100.

10. The positive electrode for a rechargeable lithium battery as claimed in any one of claims 1 to 9, wherein the thermally expandable polymer comprises a polymer configured to expand in a temperature range of about 60 °C to about 200 °C.

11. The positive electrode for a rechargeable lithium battery as claimed in claim 10, wherein the thermally expandable polymer comprises at least one of polyolefin, polystyrene, an ethylene-vinyl acetate copolymer, an ethylene-acrylic acid copolymer, an ethylene-methacrylic acid copolymer, polytetrafluoroethylene, polyamide, polyacrylonitrile, thermoplastic elastomer, polyethylene oxide, polyacetal, thermoplastic modified cellulose, polysulfone, a (meth)acrylate copolymer, polymethyl(meth)acrylate, and a copolymer thereof.

12. The positive electrode for a rechargeable lithium battery as claimed in claim 11, wherein:
(i) the polyolefin comprises at least one of high density polyethylene, medium density polyethylene, low density polyethylene, very low density polyethylene, polypropylene, polymethylpentene, polybutene, and a modified product thereof; and/or
(ii) the thermally expandable polymer comprises polyethylene and polypropylene.

13. The positive electrode for a rechargeable lithium battery as claimed in any one of claims 1 to 12, wherein the thermally expandable polymer has a wax form.

14. The positive electrode for a rechargeable lithium battery as claimed in any one of claims 1 to 13, wherein:
(i) the additive has a particle diameter in a range of about 0.5 nm to about 500 nm; and/or
(ii) the functional layer further comprises a binder.

15. A rechargeable lithium battery, comprising:
the positive electrode as claimed in any one of claims 1 to 14;
a negative electrode comprising a negative active material; and
an electrolyte.
